# FASCICULE DE BREVET EUROPEEN

(11) **EP 2 085 579 B1**
(45) Date de publication et mention de la délivrance du brevet: **09.03.2011**
(21) Numéro de dépôt: 09151303.6
(22) Date de dépôt: 26.01.2009
(51) Int. Cl.: F01D 25/18

(54) **Dispositif de déshuilage et turbomachine comportant ce dispositif**
Ölabscheidevorrichtung und Turbotriebwerk umfassend diese Vorrichtung
De-oiling device and turbomachine comprising this device

(30) Priorité: 29.01.2008 FR 0850540
(43) Date de publication de la demande: 05.08.2009
(73) Titulaire: SNECMA, 75015 Paris (FR)
(72) Inventeur: Bart, Jacques, René, 91450 Soisy sur Seine (FR); Derenes, Jacky, Raphaël, Michel, 91100 Corbeil-Essonnes (FR); Rousselin, Stéphane, 77850 Hericy (FR)
(74) Mandataire: Ilgart, Jean-Christophe

(56) Documents cités:
- EP-A- 0 780 546
- EP-A- 1 582 703
- EP-A- 1 630 358
- EP-A- 1 840 028
- US-A- 5 201 845

## Description

L'invention concerne un dispositif de déshuilage comportant un tube, un premier palier et un second palier, le premier et le second palier étant placés dans une chambre à huile dans laquelle un brouillard d'huile est entretenu, un déshuileur étant prévu dans une paroi de la chambre à huile, le déshuileur centrifugeant l'huile en suspension dans l'air et laissant passer un flux d'air déshuilé à l'intérieur du tube.

Sur les turbomachines d'avion les paliers sont contenus dans des enceintes qui ont pour fonction d'empêcher l'huile de lubrification de s'échapper dans le moteur. La lubrification des paliers provoque un brouillard d'huile entretenu du fait de la rotation des pièces tournantes.

De l'air de ventilation circule dans les enceintes des paliers. Cet air, chargé d'huile, doit être déshuilé avant de quitter l'enceinte. C'est pourquoi on prévoit un déshuileur, par example comme décrit dans le document EP 1 840 028.A. Celui-ci comporte, par exemple, une structure en nid d'abeille sur laquelle les gouttelettes d'huile viennent se coller puis sont expulsées par centrifugation vers l'enceinte des paliers.

Cependant, le déshuileur peut perdre en efficacité. Ce sera le cas par exemple à un faible régime de rotation du moteur parce que, le déshuileur tournant moins vite, la centrifugation est moins efficace. C'est le cas également en cas d'encrassement des cheminées de déshuilage ou en cas de dégradation des léchettes d'étanchéité du capot d'enceinte. Les cheminées de déshuilage sont des tubes d'évacuation par centrifugation de l'huile résiduelle au niveau de l'enceinte avant.

Dans ce cas, de l'air huilé parvient jusqu'au cône de tôle appelé plug ou corps central qui prolonge la turbomachine du côté aval. Cet air est expulsé en partie basse dans la veine primaire ou directement dans le plug. Les conséquences sont des salissures générées par l'huile sur le plug et la nacelle extérieure. Ces salissures ne sont pas admissibles, particulièrement dans le cas de l'aviation d'affaires dans laquelle les moteurs et surtout l'extérieur de la nacelle doivent rester parfaitement propres.

De plus, cette situation engendre une consommation d'huile qui a un coût pour l'utilisateur du moteur.

La présente invention a pour objet un dispositif de déshuilage qui remédie à ces inconvénients.

Ces buts sont atteints, conformément à l'invention, par le fait que le tube comporte un capot de fermeture équipé à sa partie supérieure d'un ou plusieurs orifices de sortie destinés à évacuer l'air et, à sa partie inférieure, d'un orifice de drainage pour récupération de l'huile.

Grâce à ces caractéristiques l'air huilé percute le capot de fermeture. Les gouttelettes d'huile présentes dans l'air se collent sur ce capot et descendent par gravité jusqu'à l'orifice de drainage de l'huile. L'air déshuilé s'échappe par la partie supérieure du capot de fermeture dans laquelle des orifices sont prévus à cet effet.

Ainsi, de l'air parfaitement propre est introduit dans la veine primaire ou directement dans le plug. On évite les salissures.

Dans une réalisation, le tube est constitué par un arbre basse pression prolongé par un fourreau emmanché avec l'arbre basse pression. Cette réalisation concerne principalement les moteurs de petites dimensions tels que ceux qui sont utilisés dans l'aviation d'affaire.

Selon une autre réalisation, le tube est constitué par un tube central de ventilation.

Cette réalisation concerne des moteurs de taille plus importante tels que ceux qui sont utilisés dans l'aviation commerciale. En effet, ces moteurs sont suffisamment gros pour permettre l'implantation d'un tube central de ventilation.

Avantageusement, l'orifice de drainage de l'huile est raccordé par un tuyau à un réservoir de récupération d'huile.

D'autre part, l'invention concerne une turbomachine à double flux comprenant un flux primaire et un flux secondaire et comportant un dispositif de déshuilage de l'huile. Les orifices de sortie d'air sont prolongés par des canalisations qui amènent l'air jusque dans le flux primaire de la turbomachine.

Dans une autre réalisation l'invention concerne une turbomachine dans laquelle les orifices de sortie prévus dans le capot débouchent directement dans plug.

D'autres caractéristiques et avantages de la présente invention apparaîtront encore à la lecture de la description qui suit d'un exemple de réalisation donné à titre illustratif en référence aux figures annexées. Sur ces figures :
- la figure 1 est une vue générale en coupe d'un turboréacteur ;
- la figure 2 est une vue en coupe d'un dispositif de déshuilage conforme à l'art antérieur ;
- la figure 3 est une vue en coupe d'un dispositif de déshuilage conforme à la présente invention ;
- la figure 4 est une vue à échelle agrandie d'une partie du dispositif de déshuilage représenté sur la figure 3 ;
- la figure 5 est une vue de détail du réservoir de réception de l'huile.

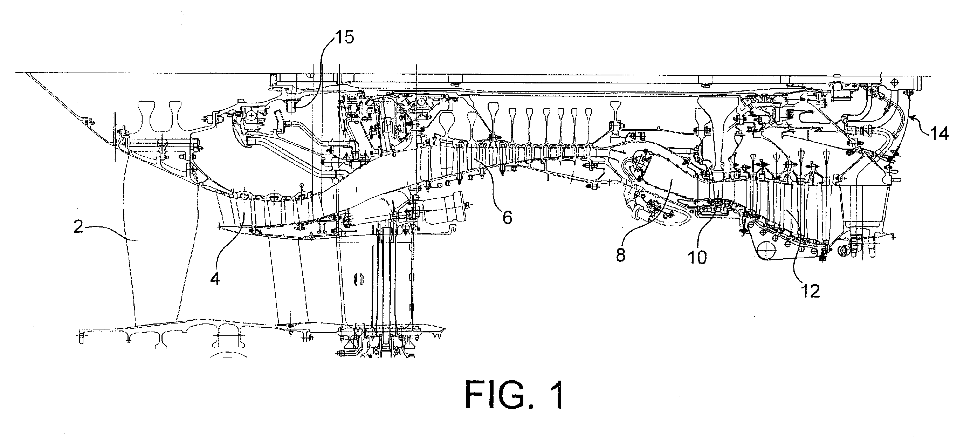

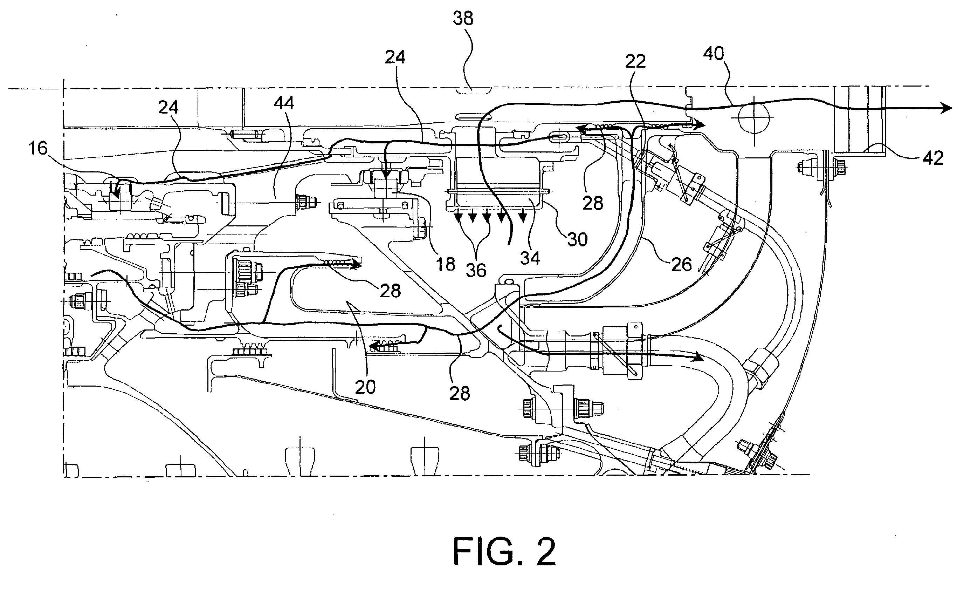

On a représenté sur la figure 1 une vue générale d'un turboréacteur d'avion auquel l'invention est susceptible de s'appliquer. Celui-ci comporte, d'avant en arrière, une soufflante 2, un compresseur à basse pression 4, un compresseur à haute pression 6, une chambre de combustion 8, une turbine à haute pression 10 et une turbine à basse pression 12. On a désigné par la référence 14 la zone qui intéresse l'invention est qui représentée plus en détail sur la figure 2. La référence 15 désigne une cheminée de déshuilage.

Sur figure 2 on a désigné par la référence 16 un premier palier et par la référence 18 un second palier. Les paliers 16 et 18 sont situés à l'intérieur d'une enceinte 20 formant une chambre à huile. Les paliers 16 et 18 sont lubrifiés par un écoulement d'huile de lubrification en provenance d'un gicleur 22 comme schématisé par les flèches 24. La rotation de paliers 16 et 18 donne naissance à un brouillard d'huile qui remplit l'enceinte 20. L'enceinte 20 est délimitée par un capot d'enceinte pressurisée 26. De l'air de pressurisation pénètre dans la chambre 20, comme schématisé par les flèches 28. Un déshuileur 30 est prévu autour du tube central de ventilation 32. Le déshuileur 30 comporte une structure en nid d'abeille 34 sur laquelle les fines gouttelettes d'huile viennent se coller. Du fait de la rotation du déshuileur, ces fines gouttelettes sont éjectées par la force centrifuge comme schématisé par les flèches 36 tandis que l'air déshuilé traverse le déshuileur et pénètre par des orifices 38 à l'intérieur du tube central de ventilation 32. L'air déshuilé parcours ensuite le tube central de ventilation d'avant en arrière, comme représenté par la flèche 40 puis pénètre dans le plug après avoir traversé l'orifice de sortie 42. La référence 44 désigne l'arbre basse pression.

Avec un tel dispositif, si le déshuileur 30 perd en efficacité, de l'air mal déshuilé le franchit et parvient jusqu'au plug et est expulsé en partie basse dans la veine primaire. Il en résulte des salissures générées par l'huile sur le plug et la nacelle extérieure, ce qui n'est pas admissible, particulièrement dans l'aviation d'affaires.

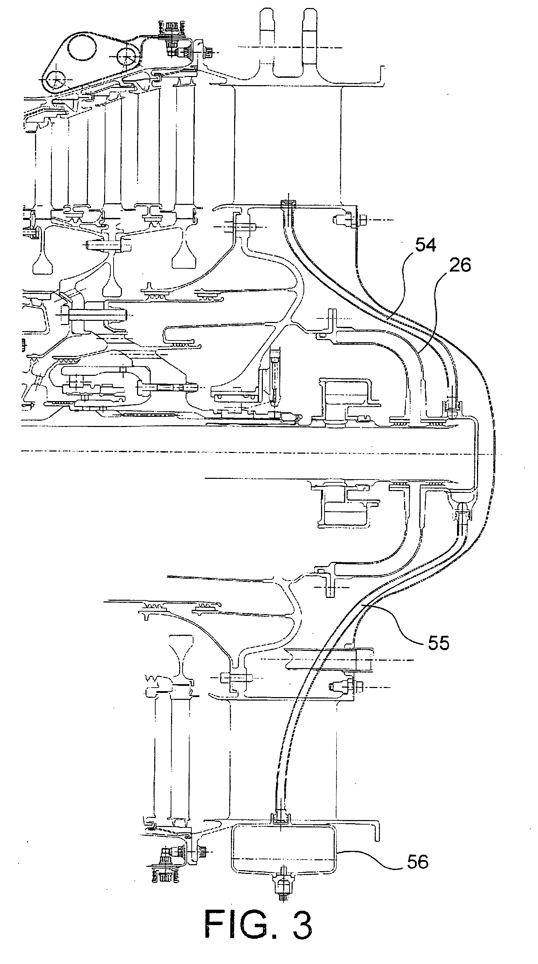

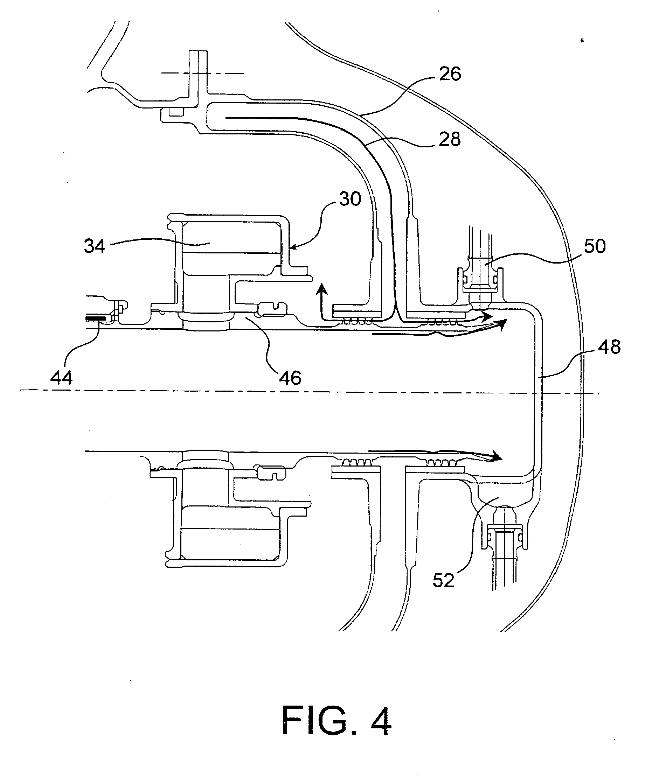

On a représenté sur la figure 3 et 4 un exemple de réalisation d'un dispositif de déshuilage conforme à la présente invention. Etant donné que ce dispositif est destiné à équiper un turboréacteur de faible dimension tel que celui d'un avion d'affaires, il n'y a pas la place de loger un tube central de ventilation. C'est pourquoi l'arbre basse pression 44 est relié à un fourreau 46 qui prolonge l'arbre basse pression 44. Conformément à la présente invention, un capot 48 est monté à l'extrémité droite (selon les figures 3 et 4) du fourreau 46. Le déshuileur 30 est monté sur le fourreau 46. Le capot de fermeture 48 est équipé d'un ou plusieurs orifices de sortie 50 situés à sa partie supérieure. En partie basse, il comporte une cavité 52 qui permet le drainage de l'huile. Une canalisation 55 raccorde la cavité 52 à un petit réservoir 56 pour la récupération de l'huile (figure 3).

Le fonctionnement du dispositif est le suivant. L'air huilé qui a franchi le déshuileur 30 est plaqué contre les parois internes du fourreau 46 sous l'effet de la rotation de celui-ci. Les gouttelettes d'huile se collent à la paroi interne du fourreau, et à l'extrémité de celui-ci elles sont centrifugées sur le capot de fermeture 48. L'air déshuilé s'échappe par les orifices de sortie 50 tandis que l'huile se concentre dans la cavité 52.

Les orifices 50 peuvent déboucher directement dans le plug ou bien des canalisations 54 permettent d'amener l'air déshuilé dans la veine primaire.

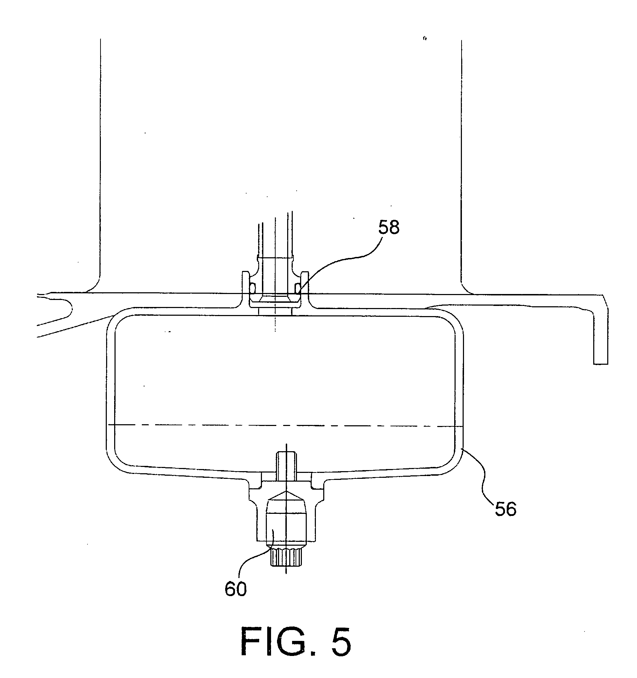

On a représente sur la figure 5 une vue de détail du réservoir 56 qui sert à recueillir l'huile. Le réservoir est fixé sur le carter d'échappement 57. Il comporte un bossage 58 permettant de connecter le tuyau 55 ainsi qu'un bouchon 60 pour la vidange du réservoir.

## Revendications

1. Dispositif de déshuilage comportant un tube (46), un premier palier (16) et un second palier (18), le premier le second palier (16, 18) étant placés dans une chambre à huile (20) dans laquelle un brouillard d'huile est entretenu par la rotation des paliers, un déshuileur (30) étant prévu dans une paroi de la chambre à huile, le déshuileur centrifugeant l'huile en suspension dans l'air et laissant passer un flux d'air déshuilé à l'intérieur du tube (46), **caractérisé en ce que** le tube (46) comporte un capot de fermeture (48) équipé à sa partie supérieure d'un ou plusieurs orifices de sortie (50) destinées à évacuer l'air et à sa partie inférieure d'un orifice de drainage de l'huile (52).

2. Dispositif de déshuilage selon la revendication 1, **caractérisé en ce que** le tube est constitué par un arbre basse pression (44) prolongé par un fourreau (46) emmanché avec l'arbre basse pression.

3. Dispositif de déshuilage selon la revendication 1, **caractérisé en ce que** le tube est constitué par un tube central de ventilation (32).

4. Dispositif de déshuilage selon l'une des revendications 1 à 3, **caractérisé en ce que** l'orifice de drainage de l'huile est raccordé par un tuyau (55) à un réservoir de récupération (56).

5. Turbomachine à double flux comprenant un flux primaire et un flux secondaire et comportant un dispositif de déshuilage selon l'une des revendications 1 à 4, **caractérisé en ce que** les orifices d'air (50) sont prolongés par les canalisations (54) qui amènent l'air jusque que dans le flux primaire de la turbomachine.

6. Turbomachine comprenant un plug et comportant un dispositif de déshuilage selon l'une des revendications 1 à 4, **caractérisé en ce que** les orifices de sortie (50) prévus dans le capot (48) débouchent directement dans le plug.

## Claims

1. Deoiling device comprising a tube (46), a first bearing (16) and a second bearing (18), the first and second bearings (16, 18) being placed in an oil chamber (20) in which an oil fog is maintained by rotation of the bearings, a deoiler (30) being provided in one wall of the oil chamber, the deoiler centrifuging oil in suspension in air and allowing a deoiled air flow to pass inside the tube (46), **characterised in that** the tube (46) comprises a closing cap (48) fitted with one or several outlet orifices (50) in its upper part to evacuate air and an oil drain orifice (52) in its lower part.

2. Deoiling device according to claim 1, **characterised in that** the tube is composed of a low pressure shaft (44) extended by a hollow shaft (46) that fits onto the low pressure shaft.

3. Deoiling device according to claim 1, **characterised in that** the tube is composed of a central ventilation tube (32).

4. Deoiling device according to any one of claims 1 to 3, **characterised in that** the oil drain orifice is connected through a pipe (55) to an oil recovery reservoir (56).

5. Double flow turbomachine comprising a primary flow and a secondary flow and comprising a deoiling device according to one of claims 1 to 4, **characterised in that** the air orifices (50) are extended by ducts (54) that bring air into the primary flow of the turbomachine.

6. Turbomachine comprising a plug and comprising a deoiling device according to one of claims 1 to 4, **characterised in that** the outlet orifices (50) provided in the cap (48) open up directly in the plug.

## Patentansprüche

1. Entölvorrichtung, die ein Rohr (46), ein erstes Lager (16) und ein zweites Lager (18) umfasst, wobei das erste und das zweite Lager (16, 18) in einer Ölkammer (20) angeordnet sind, in der durch das Drehen der Lager ein Ölnebel unterhalten wird, wobei in einer Wand der Ölkammer eine Ölschleuder (30) vorgesehen ist, welche das in der Luft schwebende Öl ausschleudert und einen entölten Luftstrom ins Innere des Rohrs (46) gelangen lässt,
**dadurch gekennzeichnet,**
**dass** das Rohr (46) einen Verschlussdeckel (48) aufweist, der in seinem oberen Teil mit einer oder mehreren Austrittsöffnungen (50) ausgestattet ist, die zum Auslassen der Luft bestimmt sind, und in seinem unteren Teil mit einer Ölablauföffnung (52) ausgestattet ist.

2. Entölvorrichtung nach Anspruch 1,
**dadurch gekennzeichnet,**
**dass** das Rohr von einer Niederdruckwelle (44) gebildet wird, die durch eine Hülse (46) verlängert wird, die mit der Niederdruckwelle durch Aufstecken verbunden ist.

3. Entölvorrichtung nach Anspruch 1,
**dadurch gekennzeichnet,**
**dass** das Rohr von einem zentral verlaufenden Lüftungsrohr (32) gebildet wird.

4. Entölvorrichtung nach einem der Ansprüche 1 bis 3,
**dadurch gekennzeichnet,**
**dass** die Ölablauföffnung durch ein Leitungsrohr (55) mit einem Auffangtank (56) verbunden ist.

5. Zweikreis-Turbotriebwerk mit einem Primärstrom und einem Mantelstrom, welches eine Entölvorrichtung nach einem der Ansprüche 1 bis 4 enthält,
**dadurch gekennzeichnet,**
**dass** die Luftaustrittsöffnungen (50) durch die Leitungen (54) fortgesetzt werden, die die Luft bis in den Primärstrom des Turbotriebwerks führten.

6. Turbotriebwerk mit einem Plug, welches eine Entölvorrichtung nach einem der Ansprüche 1 bis 4 enthält,
**dadurch gekennzeichnet,**
**dass** die Luftaustrittsöffnungen (50), die in dem Verschlussdeckel (48) vorgesehen sind, direkt in den Plug münden.
